# EUROPÄISCHE PATENTSCHRIFT

(11) **EP 1 426 256 B1**
(45) Veröffentlichungstag und Bekanntmachung des Hinweises auf die Patenterteilung: **30.07.2008**
(21) Anmeldenummer: 03013113.0
(22) Anmeldetag: 11.06.2003
(51) Int. Cl.: B60S 1/08

(54) **Sensoreinrichtung, insbesondere Regensensor sowie Montageverfahren für eine Sensoreinrichtung**
Sensor device, in particular rain sensor and method for mounting a sensor device
Dispositif de détection, en particulier capteur de pluie et méthode d'assemblage pour un dispositif de détection

(30) Priorität: 03.12.2002 DE 10256259
(43) Veröffentlichungstag der Anmeldung: 09.06.2004
(73) Patentinhaber: ROBERT BOSCH GMBH, 70442 Stuttgart (DE)
(72) Erfinder: Schneider, Andreas, 77833 Ottersweier (DE)

(56) Entgegenhaltungen:
- EP-A2- 0 928 723
- WO-A2-99/09681
- DE-U1- 29 923 466
- US-A- 5 262 640

## Beschreibung

Die vorliegende Erfindung betrifft eine Sensoreinrichtung, insbesondere einen Regensensor, gemäß dem Oberbegriff des Patentanspruches 1 sowie ein entsprechendes Montageverfahren.

Eine derartige Sensoreinrichtung ist bekannt aus der DE 199 33 640 A1, wobei das Sensorelement an der Innenseite der Scheibe mit einer auf die Scheibe geklebten Befestigungsvorrichtung gekoppelt ist. Am Gehäuseteil des Sensors ist dazu ein Befestigungsteil drehbar angebracht, welches mit der Befestigungsvorrichtung unter Klemmspannung in Eingriff gebracht wird. Dadurch wird das Sensorelement in Richtung der Scheibe gedrückt.

Allgemein bekannt ist, dass Regensensoren an die Scheibe sowohl befestigungstechnisch als auch optisch angekoppelt werden müssen. Dazu werden die Regensensoren mittels eines Vakuumsprozesses auf die Scheibe aufgeklebt oder alternativ mittels Federn an die Scheibe gepresst. Als Koppelmedium dient bei der Anpresslösung meistens Silikon, wie aus der DE 100 19 112 A1 bekannt ist. Silikon verfügt über geeignete optische Eigenschaften, ist hochtemperaturbeständig und mit einer geringen Härte verfügbar. Allgemein sind Härten für Silikon von 20 - 50 ShoreA bekannt. Dokument WO 99/09681 A2 offenbart eine Sensoreinrichtung mit den Merkmalen des Oberbegriffs des Anspruchs 1.

Weiterhin sind im Vergleich zu Silikon weichere Stoffe bekannt, die jedoch bei höheren Temperaturen nicht ausreichend formbeständig sind. Da die zur Halterung des Sensors an der Scheibe erforderlichen Montagekräfte dauernd auf das Koppelmedium wirken, neigt dieses zum Wegfließen. Dies würde bei einem weicheren Koppelmedium als Silikon zu undefinierten Zuständen führen, weshalb derartig angekoppelte Regensensoren im Automobilbereich bisher nicht einsetzbar sind.

Erfindungsgemäß sind deshalb eine Sensoreinrichtung mit den Merkmalen des Patentanspruches 1 und ein entsprechendes Montageverfahren bereitgestellt. Als Koppelmedium können dabei beispielsweise so weiche Stoffe verwendet werden wie SEBS mit einer Weichheit von weniger als 20 ShoreA. SEBS als eines der möglichen Materialien ist bei hohen Temperaturen nicht so verformungsbeständig wie Silikon, dabei im sichtbaren Bereich lichtundurchlässig und bzgl. IR-Strahlung durchlässig. Das weichere Koppelmedium ist teilweise besser verarbeitbar als das im Stand der Technik verwendete Silikon. Außerdem sind aufgrund der erfindungsgemäß großen Weichheit des Koppelmediums geringere Montage- bzw. Federkräfte zur Montage des Regensensors bei der Anpresslösung erforderlich. Dadurch ist auch bei klein realisierten Befestigungselementen eine gute Ankopplung gewährleistet, weil bei der vorteilhaften Verwendung z.B. kleinerer Befestigungsfüße bereits genügend Klebefläche zur Aufnahme der wirkenden Kräfte vorhanden ist. Die sehr weichen Stoffe sind jedoch bei höheren Temperaturen nicht formbeständig, da die Kräfte andauernd auf das Koppelmedium wirken und das Koppelmedium wegfließen würde. Die Erfindung definiert nun bei den weicheren Koppelmedien, die sich plastisch verformen können, mittels der Abstandshalter einen stabilen Endzustand, und macht diese deswegen auch beispielsweise im Automobilbereich verwendbar.

Durch einer Härtegrad des Koppelmediums (3) im Bereich von etwa bei 5 - 10 ShoreA. kann das Koppelmedium zum einen ausgezeichnet verformt werden, zum anderen ist es jedoch noch hart genug, um gut verarbeitet werden zu können bzw. um noch ausreichend auf dem Lichtleiter des Regensensors haften zu können.

Vorteilhafterweise kann der durch den Abstandshalter garantierte Mindestabstand etwa 0,3 - 3 mm betragen. Dadurch ist sichergestellt, dass der Mindestabstand groß genug ist, um eine gute Ankopplung der Sensoreinrichtung an die Scheibe zu ermöglichen; dazu ist nämlich eine Mindestmenge an Koppelmedium erforderlich. Zum anderen ist der Abstand auch nicht zu groß, was die mechanische Stabilität der Sensoranordnung beeinträchtigen würde. Besonders bevorzugt liegt der Mindestabstand im Bereich von etwa 1 mm. Dadurch ist eine Sensoreinrichtung bereitgestellt, die sowohl kostengünstig als auch kompakt ist sowie auch bei großen Scheibenkrümmungen noch gut einsetzbar ist.

Montagetechnisch besonders günstig ist es, wenn an dem Befestigungselement der Abstandshalter ausgebildet ist. Alternativ ist es auch möglich, den Abstandshalter an dem Gehäuse des Sensors auszubilden. Auch dadurch ist die Montage der Sensoreinrichtung erleichtert.

Nachfolgend sind ein Ausführungsbeispiel der erfindungsgemäßen Sensoreinrichtung und deren Montage beschrieben; es zeigen:
- Fig. 1: stark schematisiert die Sensoreinrichtung zu Beginn der Montage, sowie
- Fig. 2: die montierte Sensoreinrichtung.

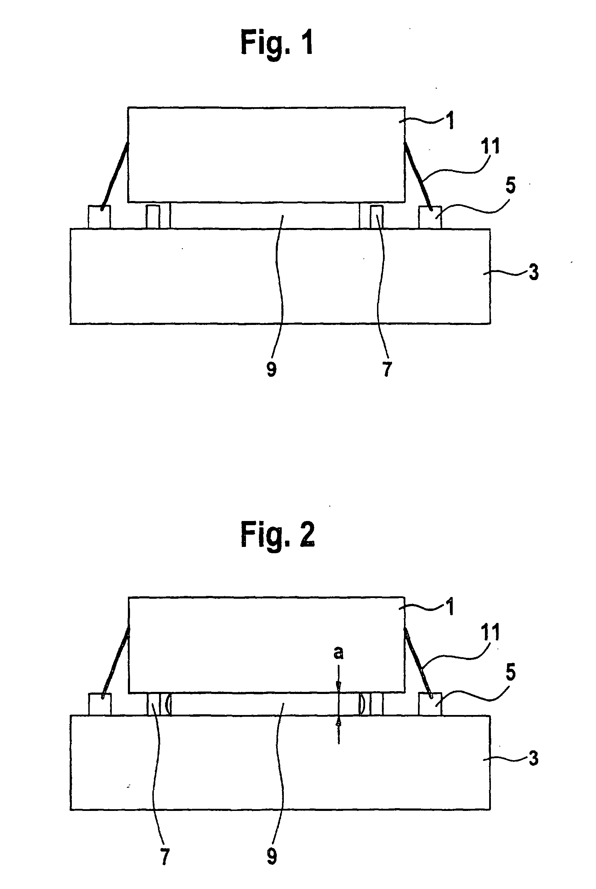

In Fig. 1 und 2 ist die Montage der Regensensoreinrichtung bei der Anpresskopplung auf die Scheibe gezeigt. Dazu wird ein an sich bekanntes Sensorelement 1 zur Detektion von Regentropfen auf einer Scheibe 3 befestigt. Dabei kann das Sensorelement 1 bevorzugt entsprechend dem in der DE 199 33 640 A1 beschriebenen Sensor ausgebildet sein, also insbesondere ein Gehäuse und einen Lichtleitkörper aufweisen. Auf die Scheibe 3 sind ein Befestigungselement 5 sowie ein vierteiliger Abstandshalter 7 geklebt. Der Sensoreinrichtung umfasst weiterhin ein Koppelmedium 9, welches beispielsweise die Optik verbessernde Farbstoffe besitzen kann (z.B. IR-durchlässiges schwarz). Als Material kann beispielsweise SEBS mit einer Weichheit von bis zu etwa 15 ShoreA verwendet werden.

Das Koppelmedium 9 wird vor der Montage des Sensorelementes 1 auf der Scheibe 3 auf den Lichtleiter des Sensors aufgebracht. Zur Montage weist die Sensoreinrichtung weiterhin Federelemente 11 auf, die bei dem Montagevorgang an dem auf der Scheibe 3 befestigten Befestigungselement 5 eingerastet werden. Dadurch wird die Luft zwischen dem Koppelmedium 9 und der Scheibe 1 verdrängt und so eine gute mechanische und insbesondere optische Ankopplung gewährleistet. Die Abstandshalters 7 sind in diesem Bereich unterhalb des Sensorelementes 1 angeordnet und weisen eine geringe Höhe im Bereich von 0,3 bis 3 mm auf. Durch die Federkraft der Federelemente 11 wird das Sensorgehäuse bzw. das Sensorelement 1 sofort oder aber auch erst nach längerer Zeitdauer in Richtung der Scheibe 3 auf die Abstandshalter 7 gedrückt (Fig. 2). Dadurch ist der Regensensor dann in einer definierten Endposition zur Scheibe bei einem vorgegebenen Mindestabstand a. Auf das Koppelmedium 9 wird danach keine Kraft mehr ausgeübt, da die Abstandshalter 7 die Anpresskräfte aufnehmen; dadurch ist eine weitere Verformung des Koppelmediums, die aufgrund der besonderen Weichheit möglich wäre, sicher verhindert. Eine optimale Anordnung der Abstandshalter 7 besteht in 4 Einzelabstandshalter, wobei im Bereich jeder Ecke des Sensorgehäuses ein Abstandshalter auf der Scheibe 3 angeordnet ist.

Alternativ können aber auch zwei leistenförmige Abstandshalter an zwei gegenüberliegenden Stirnseiten des Regensensors verwendet werden oder der Abstandshalter einteilig als Ring ausgeführt sein (nicht gezeigt). Optional können die Befestigungselemente 5 und die Abstandshalter 7 als eine Baueinheit ausgeführt sein oder alternativ können die Abstandshalter 7 auch am Sensorgehäuse angebracht sein. Die Federelemente 11 können auch am Gehäusedeckel oder am Lichtleiter des Sensorelementes 1 angreifen (nicht gezeigt).

Bei der beschriebenen Anordnung können die auftretenden Anpresskräfte bei etwa 30 - 50 N liegen. Bei der Verwendung von Silikon als Koppelmedium wären sie etwa doppelt so groß, was auch eine entsprechend aufwendige Auslegung der Befestigungsund Federelemente 5, 11 bedingen würde. Die Grundfläche der Sensoreinrichtung beträgt wie an sich bekannt etwa 3 x 4 cm.

### Bezugszeichenliste:

- 1: Sensorelement
- 3: Scheibe
- 5: Befestigungselement
- 7: Abstandshalter
- 9: Koppelmedium
- 11: Federelement

- a: Mindestabstand

## Patentansprüche

1. Sensoreinrichtung zum optischen Erfassen von Fremdkörpern, insbesondere Regentropfen, auf einer Scheibe (3) mit einem Sensorelement (1), das über ein Koppelmedium (9) an die Scheibe gekoppelt ist und über ein Befestigungselement (5) an der Scheibe befestigt ist, **dadurch gekennzeichnet, dass** das Koppelmedium (9) einen Härtegrad von etwa 5 - 10 ShoreA aufweist, und dass zwischen dem Sensorelement (1) und der Scheibe (3) ein Abstandshalter (7) vorgesehen ist zur Definition eines Mindestabstandes (a).

2. Sensoreinrichtung nach Anspruch 1, **dadurch gekennzeichnet, dass** als Koppelmedium (9) SEBS dient.

3. Sensoreinrichtung nach einem der vorhergehenden Ansprüche, **dadurch gekennzeichnet, dass** der Mindestabstand (a) etwa 0,3 - 3 mm beträgt.

4. Sensoreinrichtung nach einem der vorhergehenden Ansprüche, **dadurch gekennzeichnet, dass** der Abstandshalter zumindest zweiteilig ausgebildet ist.

5. Sensoreinrichtung nach einem der vorhergehenden Ansprüche, **dadurch gekennzeichnet, dass** das Befestigungselement den Abstandshalter aufweist.

6. Verfahren zur Montage einer Sensoreinrichtung auf einer Scheibe (3), wobei ein Befestigungselement (5) an der Scheibe befestigt wird, ein Koppelmedium (9) und ein Abstandshalter (7) zwischen dem Sensorelement (1) und der Scheibe angeordnet werden, und das Sensorelement an dem Befestigungselement befestigt wird, wobei das Koppelmedium (9) einen Härtegrad von etwa 5-10 ShoreA aufweist und durch den Abstandshalter (7) ein Mindestabstand (a) zwischen dem Sensorelement und der Scheibe definiert wird.

## Claims

1. Sensor device for optically detecting foreign bodies, in particular rain drops, on a screen (3) with a sensor element (1) which is coupled to the screen via a coupling agent (9) and is fastened to the screen via a fastening element (5), **characterized in that** the coupling agent (9) has a Shore A hardness grade of approximately 5 - 10, and **in that** a spacer (7) is provided between the sensor element (1) and the screen (3) in order to define a minimum distance (a).

2. Sensor device according to Claim 1, **characterized in that** SEBS serves as the coupling agent (9).

3. Sensor device according to one of the preceding claims, **characterized in that** the minimum distance (a) is approximately 0.3 - 3 mm.

4. Sensor device according to one of the preceding claims, **characterized in that** the spacer is designed in at least two parts.

5. Sensor device according to one of the preceding claims, **characterized in that** the fastening element has the spacer.

6. Method for installing a sensor device on a screen (3), wherein a fastening element (5) is fastened to the screen, a coupling agent (9) and a spacer (7) are arranged between the sensor element (1) and the screen, and the sensor element is fastened to the fastening element, wherein the coupling agent (9) has a Shore A hardness grade of approximately 5 - 10 and the spacer (7) defines a minimum distance (a) between the sensor element and the screen.

## Revendications

1. Installation de capteur en particulier pour la saisie optique de corps étrangers, notamment de gouttelettes de pluie sur une vitre (3), comprenant un élément de capteur (1) couplé à la vitre par un milieu de couplage (9) et fixé à la vitre par un élément de fixation (5),
**caractérisée en ce que**
le milieu de couplage (9) a un degré de dureté de l'ordre de 5-10 ShoreA et **en ce qu'**
un organe d'écartement (7) entre l'élément de capteur (1) et la vitre (3) définit une distance minimale (a).

2. Installation de capteur selon la revendication 1,
**caractérisée en ce que**
le milieu de couplage (9) est un polymère SEBS.

3. Installation de capteur selon l'une des revendications précédentes,
**caractérisée en ce que**
la distance minimale (a) est de l'ordre de 0,3-3 mm.

4. Installation de capteur selon l'une des revendications précédentes,
**caractérisée en ce que**
l'organe d'écartement est réalisé au moins en deux parties.

5. Installation de capteur selon l'une des revendications précédentes,
**caractérisée en ce que**
l'élément de fixation comporte l'organe d'écartement.

6. Procédé de montage d'une installation de capteur sur une vitre (3) selon lequel on fixe un élément de fixation (5) à la vitre, on installe un milieu de couplage (9) et un organe d'écartement (7) entre l'élément de capteur (1) et la vitre et on fixe l'élément de capteur sur l'élément de fixation et
le milieu de couplage (9) a un degré de dureté de l'ordre de 5-10 ShoreA et
l'organe d'écartement (7) définit une distance minimale (a) entre l'élément de capteur et la vitre.
